# EUROPEAN PATENT SPECIFICATION

(11) **EP 2 779 934 B1**
(45) Date of publication and mention of the grant of the patent: **03.08.2016**
(21) Application number: 12849589.2
(22) Date of filing: 17.11.2012
(51) Int. Cl.: A61C 5/02, A61C 3/08

(54) **DEVICE FOR PLACING ROOT REPAIR MATERIALS FOR ROOT-END CAVITIES**
VORRICHTUNG ZUM PLATZIEREN VON MATERIALIEN ZUR WURZELREPARATUR FÜR WURZELSPITZENHOHLRÄUME
DISPOSITIF DE POSE DE MATIÈRES DE RÉPARATION DE RACINE POUR DES CAVITÉS RADICULO-DENTAIRES

(30) Priority: 17.11.2011 US 201161561216 P
(43) Date of publication of application: 24.09.2014
(73) Proprietor: Loma Linda University, Loma Linda, California 92354 (US)
(72) Inventor: JARAMILLO, David E., Loma Linda, California 92354 (US)
(74) Representative: Tischner, Oliver
(86) International application number: PCT/US2012/065721
(87) International publication number: WO 2013/075058

(56) References cited:
- DE-A1- 1 950 630
- DE-U1- 20 203 272
- GB-A- 2 269 105
- US-A- 5 051 093
- US-A- 5 242 302
- US-A1- 2007 015 107
- US-A1- 2009 042 165
- US-A1- 2009 047 634
- US-A1- 2011 151 401

## Description

### BACKGROUND

Root-end surgery, also known as apicoectomy, is an endodontic surgical procedure used to treat a variety of diseases. Root-end surgery generally involves the removal of the root tip of a tooth and the subsequent filling of the root-end cavity with a biocompatible material. A variety of root repair materials have been used to fill root-end cavities including modified zinc oxide-eugenol (ZOE), intermediate restorative material (IRM^{®}, Dentsply International Inc., York, PA, US) and super ethoxybenzoic acid (SuperEBA^{®}, Skokie, IL, US). Recently, however, newer materials have replaced the earlier materials. These newer materials include mineral trioxide aggregate (MTA, such as ProRoot^{®}, Tulsa, OK, US), Biodentin^{®} (Septodont, Lancaster, PA, US) and EndoSequence^{®} Root Repair Material (Peter Brasseler Holdings, LLC, Savannah, GA, US).

Due to the variable anatomy of the root-end of teeth and small operating fields for root-end surgery, placement of the newer root repair materials is particularly difficult and requires specialized devices. Therefore, there is a need for new devices and procedures for placing root repair materials to fill root-end cavities during root-end surgery. US 5 242 302 discloses a background art tool for such an application.

### SUMMARY

The invention is as defined in claim 1.

According to one embodiment of the present invention, there is provided a device for placing and compacting root repair materials for root-end surgery to fill root-end cavities during root-end surgery. The device comprises: a) a first working section; b) a second working section; c) an intermediate section between the first working section and the second working section; d) a primary axis a defining a total axial length n; where the first working section joins the intermediate section at a first working section/intermediate section junction; where the second working section joins the intermediate section at a second working section/intermediate section junction; where the intermediate section comprises a primary axis coincident the primary axis a of the device, and comprises an axial length o along the primary axis a between the first working section/intermediate section junction and the second working section/intermediate section junction; where the intermediate section further comprises a cross-sectional area perpendicular to the primary axis a; where the cross-sectional area of the intermediate section comprises an outer circumference defining an outer surface of the intermediate section; where the outer surface of the intermediate section comprises a gripping surface to assist a user in manipulating the device; where the first working section of the device comprises a proximal part, a distal part, and an intermediate part between the proximal part and the distal part; where the proximal part of the first working section joins the intermediate section of the device to the intermediate part of the first working section; where the proximal part of the first working section joins the intermediate section of the device at the first working section/intermediate section junction; where the proximal part of the first working section joins the intermediate part of the first working section of the device at a proximal part of the first working section/intermediate part of the first working section junction; where the proximal part of the first working section comprises a primary axis coincident the primary axis a of the device, and an axial length p along the primary axis a between the first working section/intermediate section junction and proximal part of the first working section/intermediate part of the first working section junction; where the intermediate part of the first working section joins the proximal part of the first working section to the distal part of the first working section. where the intermediate part of the first working section joins the proximal part of the first working section at the proximal part of the first working section/intermediate part of the first working section junction; where the intermediate part of the first working section joins the distal part of the first working section at an intermediate part of the first working section/distal part of the first working section junction; where the intermediate part comprises a primary axis b which forms an angle α with the primary axis a of the device, and comprises an axial length q along the primary axis b between the proximal part of the first working section/intermediate part of the first working section junction and the intermediate part of the first working section/distal part of the first working section junction; where the primary axis b is in the same plane as the primary axis a; where the distal part of the first working section joins the intermediate part of the first working section at the intermediate part of the first working section/distal part of the first working section junction; where the distal part of the first working section comprises a proximal end and a distal end; where the distal part of the first working section further comprises a primary axis c which forms an angle β with the primary axis b of the intermediate part of the first working section; where the primary axis c is in the same plane as the primary axis a and the primary axis b; where the distal part of the first working section further comprises an axial length r along the primary axis c between the intermediate part of the first working section/distal part of the first working section junction and the distal end of the distal part of the first working section; where the proximal end of the distal part of the first working section comprises a cross-sectional diameter perpendicular to the primary axis c; where the distal end of the distal part of the first working section forms an oval shape when viewed into the primary axis c of the distal part of the first working section; where the distal end has a greater lateral axis comprising a midpoint and a lesser lateral axis comprising a midpoint; where the greater lateral axis is perpendicular to and longer than the lesser lateral axis, where the midpoint of the greater lateral axis crosses the midpoint of the lesser lateral axis; where the greater lateral axis of the distal end is between 0.3 mm and 1.5 mm; where the distal end of the distal part of the first working section further comprises a serrated surface, where the serrated surface comprises a plurality of raised pyramidal structures; where the second working section comprises a proximal part of the second working section and a distal part of the second working section; where the proximal part of the second working section joins the intermediate section of the device at a second working section/intermediate section junction, and the proximal part of the second working section joins the distal part of the second working section at a proximal part of the second working section/distal part of the second working section junction; where the proximal part of the second working section comprises a primary axis coincident the primary axis a of the device, and an axial length s along the primary axis a between the second working section/intermediate section junction and the proximal part of the second working section/distal part of the second working section junction; where the distal part of the second working section comprises a proximal end and a distal end; where the proximal end of the distal part of the second working section joins the proximal part of the second working section at a proximal part of the second working section/distal part of the second working section junction; where the distal part of the second working section comprises a primary axis d which forms an angle γ with the primary axis a of the device; where the distal part of the second working section further comprises an axial length t along the primary axis d between the proximal part of the second working section/distal part of the second working section junction and the distal end of the distal part of second working section; where the primary axis d is in the same plane as the primary axis a, the primary axis b and the primary axis c; where the proximal end of the distal part of the second working section comprises a cross-sectional diameter perpendicular to the primary axis d of the distal part of the second working section; and where the distal end of the distal part of the second working section comprises a cross-sectional diameter perpendicular to the primary axis d of the distal part of the second working section.

According to another embodiment not part of the claimed invention, there is provided a device for placing and compacting root repair materials for root-end surgery to fill root-end cavities during root-end surgery. The device comprises: a) a first working section; b) a second working section; c) an intermediate section between the first working section and the second working section; d) a primary axis a defining a total axial length n; where the first working section joins the intermediate section at a first working section/intermediate section junction; where the second working section joins the intermediate section at a second working section/intermediate section junction; where the intermediate section comprises a primary axis coincident the primary axis a of the device, and comprises an axial length o along the primary axis a between the first working section/intermediate section junction and the second working section/intermediate section junction; where the intermediate section further comprises a cross-sectional area perpendicular to the primary axis a; where the cross-sectional area of the intermediate section comprises an outer circumference defining an outer surface of the intermediate section; where the outer surface of the intermediate section comprises a gripping surface to assist a user in manipulating the device; where the first working section of the device comprises a proximal part and a distal part; where the proximal part of the first working section joins the intermediate section of the device to the distal part of the first working section; where the proximal part of the first working section joins the intermediate section of the device at the first working section/intermediate section junction; where the proximal part of the first working section joins the distal part of the second working section of the device at a proximal part of the first working section/distal part of the first working section junction; where the proximal part of the first working section comprises a primary axis coincident the primary axis a of the device, and an axial length p along the primary axis a between the first working section/intermediate section junction and proximal part of the first working section/distal part of the first working section junction; where the distal part of the first working section joins the proximal part of the first working section at the proximal part of the first working section/distal part of the first working section junction; where the distal part of the first working section comprises a proximal end and a distal end; where the distal part of the first working section further comprises a primary axis b which forms an angle α with the primary axis a of the proximal part of the first working section; where the distal part of the first working section further comprises an axial length q along the primary axis b between the proximal part of the first working section/distal part of the first working section junction and the distal end of the distal part of the first working section; where the distal end of the distal part of the first working section forms an oval shape when viewed into the primary axis b of the distal part of the first working section; where the distal end has a greater lateral axis comprising a midpoint and a lesser lateral axis comprising a midpoint; where the greater lateral axis is perpendicular to and longer than the lesser lateral axis; where the midpoint of the greater lateral axis crosses the midpoint of the lesser lateral axis; where the distal end of the distal part of the first working section further comprises a serrated surface; where the second working section of the device comprises a proximal part and a distal part; where the proximal part of the second working section joins the intermediate section of the device to the distal part of the second working section; where the proximal part of the second working section joins the intermediate section of the device at the second working section/intermediate section junction; where the proximal part of the second working section joins the distal part of the second working section of the device at a proximal part of the second working section/distal part of the second working section junction; where the proximal part of the second working section comprises a primary axis coincident the primary axis a of the device, and an axial length r along the primary axis a between the second working section/intermediate section junction and proximal part of the second working section/distal part of the second working section junction; where the distal part of the second working section joins the proximal part of the second working section at the proximal part of the second working section/distal part of the second working section junction; where the distal part of the second working section comprises a proximal end and a distal end; where the distal part of the second working section further comprises a primary axis c which forms an angle β with the primary axis a of the proximal part of the second working section; where the primary axis c is in the same plane as the primary axis a and the primary axis b; where the distal part of the second working section further comprises an axial length s along the primary axis c between the proximal part of the second working section/distal part of the second working section junction and the distal end of the distal part of the second working section; where the distal end of the distal part of the second working section forms an oval shape when viewed into the primary axis c of the distal part of the second working section; where the distal end has a greater lateral axis comprising a midpoint and a lesser lateral axis comprising a midpoint; where the greater lateral axis is perpendicular to and longer than the lesser lateral axis; where the midpoint of the greater lateral axis crosses the midpoint of the lesser lateral axis, corresponding to the elements in the distal end of the first working section; and where the distal end of the distal part of the second working section further comprises a serrated surface.

According to another embodiment not part of the claimed invention, there is provided a device for placing and burnishing root repair materials for root-end surgery to fill root-end cavities during root-end surgery, the device comprises: a) a first working section; b) a second working section; c) an intermediate section between the first working section and the second working section; d) a primary axis a defining a total axial length n; where the first working section joins the intermediate section at a first working section/intermediate section junction; where the second working section joins the intermediate section at a second working section/intermediate section junction; where the intermediate section comprises a primary axis coincident the primary axis a of the device, and comprises an axial length o along the primary axis a between the first working section/intermediate section junction and the second working section/intermediate section junction; where the intermediate section further comprises a cross-sectional area perpendicular to the primary axis a; where the cross-sectional area of the intermediate section comprises an outer circumference defining an outer surface of the intermediate section; where the outer surface of the intermediate section comprises a gripping surface to assist a user in manipulating the device; where the first working section of the device comprises a proximal part and a distal part; where the first working section of the device comprises a proximal part, a distal part, and an intermediate part between the proximal part and the distal part; where the proximal part of the first working section joins the intermediate section of the device to the intermediate part of the first working section; where the proximal part of the first working section joins the intermediate section of the device at the first working section/intermediate section junction; where the proximal part of the first working section joins the intermediate part of the first working section of the device at a proximal part of the first working section/intermediate part of the first working section junction; where the proximal part of the first working section comprises a primary axis coincident the primary axis a of the device, and an axial length p along the primary axis a between the first working section/intermediate section junction and proximal part of the first working section/intermediate part of the first working section junction; where the intermediate part of the first working section joins the proximal part of the first working section to the distal part of the first working section; where the intermediate part of the first working section joins the proximal part of the first working section at the proximal part of the first working section/intermediate part of the first working section junction; where the intermediate part of the first working section joins the distal part of the first working section at an intermediate part of the first working section/distal part of the first working section junction; where the intermediate part comprises a primary axis b which forms an angle α with the primary axis a of the device, and comprises an axial length q along the primary axis b between the proximal part of the first working section/intermediate part of the first working section junction and the intermediate part of the first working section/distal part of the first working section junction; where the primary axis b is in the same plane as the primary axis a; where the distal part of the first working section joins the intermediate part of the first working section at the intermediate part of the first working section/distal part of the first working section junction; where the distal part of the first working section comprises a proximal end and a distal end; where the distal part of the first working section further comprises a primary axis c which forms an angle β with the primary axis b of the intermediate part of the first working section; where the primary axis c is in the same plane as the primary axis a and the primary axis b; where the distal part of the first working section further comprises an axial length r along the primary axis c between the intermediate part of the first working section/distal part of the first working section junction and the distal end of the distal part of the first working section; where the proximal end of the distal part of the first working section comprises a cross-sectional diameter perpendicular to the primary axis c; where the distal end of the distal part of the first working section forms a round or an oval shape perpendicular to the primary axis c of the distal part of the first working section when viewed from the lateral perspective; where the second working section of the device comprises a proximal part, a distal part, and an intermediate part between the proximal part and the distal part; where the proximal part of the second working section joins the intermediate section of the device to the intermediate part of the second working section; where the proximal part of the second working section joins the intermediate section of the device at the second working section/intermediate section junction; where the proximal part of the second working section joins the intermediate part of the second working section of the device at a proximal part of the second working section/intermediate part of the second working section junction; where the proximal part of the second working section comprises a primary axis coincident the primary axis a of the device, and an axial length s along the primary axis a between the second working section/intermediate section junction and proximal part of the second working section/intermediate part of the second working section junction; where the intermediate part of the second working section joins the proximal part of the second working section to the distal part of the second working section; where the intermediate part of the second working section joins the proximal part of the second working section at the proximal part of the second working section/intermediate part of the second working section junction; where the intermediate part of the second working section joins the distal part of the second working section at the intermediate part of the second working section/distal part of the second working section junction; where the intermediate part comprises a primary axis d which forms an angle γ with the primary axis a of the device, and comprises an axial length t along the primary axis d between the proximal part of the second working section/intermediate part of the second working section junction and the intermediate part of the second working section/distal part of the second working section junction; where the primary axis d is in the same plane as the primary axis a; where the distal part of the second working section joins the intermediate part of the second working section at the intermediate part of the second working section/distal part of the second working section junction; where the distal part of the second working section comprises a proximal end and a distal end; where the distal part of the second working section further comprises a primary axis e which forms an angle δ with the primary axis d of the intermediate part of the second working section; where the primary axis e is in the same plane as the primary axis a and the primary axis d; where the distal part of the second working section further comprises an axial length u along the primary axis e between the intermediate part of the second working section/distal part of the second working section junction and the distal end of the distal part of the second working section; where the proximal end of the distal part of the second working section comprises a cross-sectional diameter perpendicular to the primary axis e of the distal part of the second working section; and where the distal end of the distal part of the second working section comprises a cross-sectional diameter perpendicular to the primary axis d of the distal part of the second working section.

According to another embodiment not part of the claimed invention, there is provided a system for placing, compacting or burnishing root repair materials for root-end surgery to fill root-end cavities during root-end surgery. The system comprises one or more than one device according to the present invention.

According to another embodiment not part of the claimed invention, there is provided a method for placing, compacting or burnishing root repair materials for root-end surgery to fill root-end cavities during root-end surgery. The method comprises: a) providing one or more than one device, or providing a system; and b) using the device or the system to place, compact or burnish root repair materials for root-end surgery to fill root-end cavities during root-end surgery. In one embodiment, the method further comprises providing a root repair material. In another embodiment, the method further comprises preparing a tooth to receive the root repair material. In another embodiment, the method further comprises diagnosing a patient with a condition or disease of a tooth suitable for repair with the method.

### DRAWINGS

These and other features, aspects and advantages of the present invention will become better understood with regard to the following description, appended claims, and accompanying drawings where:
Figure 1 is a lateral perspective view of a device according to the present invention for placing and compacting root repair materials to fill root-end cavities during root-end surgery;
Figure 2 is a lateral perspective view of the first working section of the device shown in Figure 1;
Figure 3, Figure 4 and Figure 5 are close-up, partial, lateral perspective views of the distal part of the first working section of the device shown in Figure 1 and Figure 2;
Figure 6 is a lateral perspective view of the second working section of the device shown in Figure 1;
Figure 7 is a close-up, lateral perspective view of the distal part of the second working section of the device shown in Figure 1 and of the distal part of the second working section of the device shown in Figure 14;
Figure 8 is a lateral perspective view of another device not part of the claimed invention for placing and compacting root repair materials to fill root-end cavities during root-end surgery;
Figure 9 is a close-up, lateral perspective view of the first working section of the device shown in Figure 8;
Figure 10 is a close-up, lateral perspective view of the second working section of the device shown in Figure 8;
Figure 11 is a lateral perspective view of another device not part of the claimed invention for placing and compacting root repair materials to fill root-end cavities during root-end surgery;
Figure 12 is a close-up, lateral perspective view of the first working section of the device shown in Figure 11;
Figure 13 is a close-up, frontal-lateral perspective view of the first working section of the device shown in Figure 11; and
Figure 14 is a close-up, lateral perspective view of the second working section of the device shown in Figure 11.

### DESCRIPTION

According to one embodiment, there is provided a device for placing, compacting or burnishing root repair materials for root-end surgery (a micro plugger) to fill root-end cavities (endodontic cavities) during root-end surgery, and specifically for placing, compacting or burnishing root newer root repair materials to fill root-end cavities (endodontic cavities). According to another embodiment , there is provided a system for placing, compacting or burnishing root repair materials for root-end surgery (a micro plugger) to fill root-end cavities during root-end surgery, and specifically for placing, compacting or burnishing newer root repair materials (endodontic cavities). The system comprises one or more than one device for placing and compacting root repair materials for root-end surgery to fill root-end cavities during root-end surgery, and specifically for placing and compacting newer root repair materials to fill root-end cavities. According to another embodiment, there is provided a method for placing, compacting or burnishing root repair materials for root-end surgery to fill root-end cavities during root-end surgery (endodontic cavities), and specifically for placing, compacting or burnishing root repair newer root repair materials to fill root-end cavities (endodontic cavities). In one embodiment, the method comprises providing a device or comprises providing a system. Both the devices and method will now be disclosed in detail.

As used herein, except where the context requires otherwise, the term "comprise" and variations of the term, such as "comprising," "comprises" and "comprised"are not intended to exclude other additives, components, integers or steps.

All dimensions specified in this disclosure are by way of example only and are not intended to be limiting unless indicated. Further, the proportions shown in these Figures are not necessarily to scale. As will be understood by those with skill in the art with reference to this disclosure, the actual dimensions of any device or part of a device disclosed in this disclosure will be determined by its intended use.

According to one embodiment, there is provided a device for placing and compacting root repair materials for root-end surgery (a micro plugger) to fill root-end cavities (endodontic cavities) during root-end surgery, and specifically for placing and compacting newer root repair materials to fill root-end cavities (endodontic cavities). The devices are designed to be used in conjunction with magnification under illumination, as will be understood by those with skill in the art with respect to this disclosure. Both the dimensions and configuration of the working ends of the devices are easier to use and function superiorly compared with prior art devices for the same purposes, and in particular for placing newer root repair materials such as mineral trioxide aggregate (MTA, such as ProRoot^{®}, Tulsa, OK, US), Biodentin^{®} (Septodont, Lancaster, PA, US) and EndoSequence^{®} Root Repair Material, (Peter Brasseler Holdings, LLC, Savannah, GA, US), for root-end surgery to fill root-end cavities during root-end surgery, and for performing a method according to the present disclosure. In a preferred disclosure, the devices are constructed to be sterilizable for reuse on multiple patients and are constructed to be inexpensive to manufacture. In a preferred disclosure, the devices comprise a biocompatible material, such as for example stainless steel. The devices are manufactured according to techniques known to those with skill in the art.

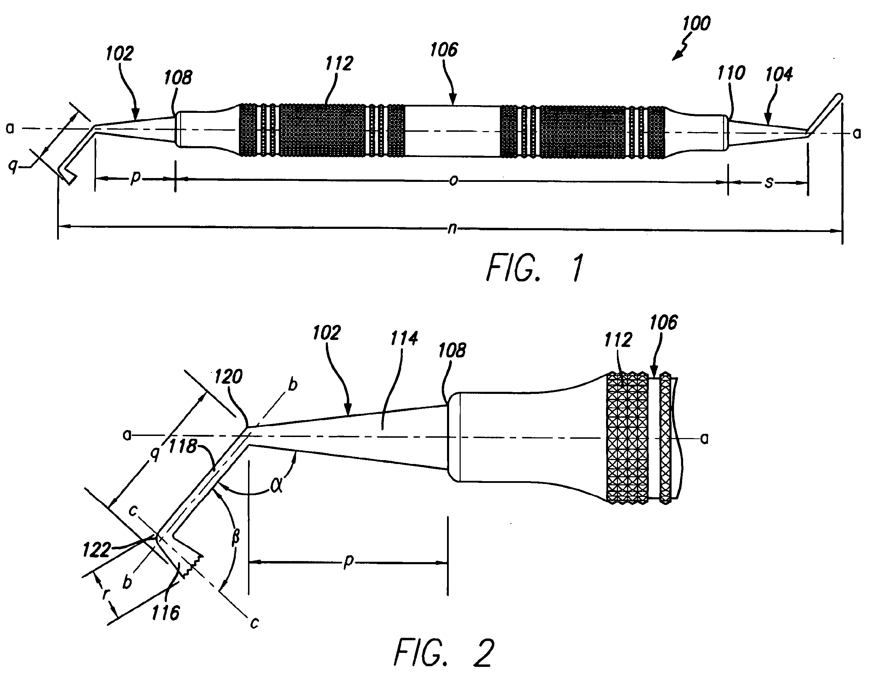

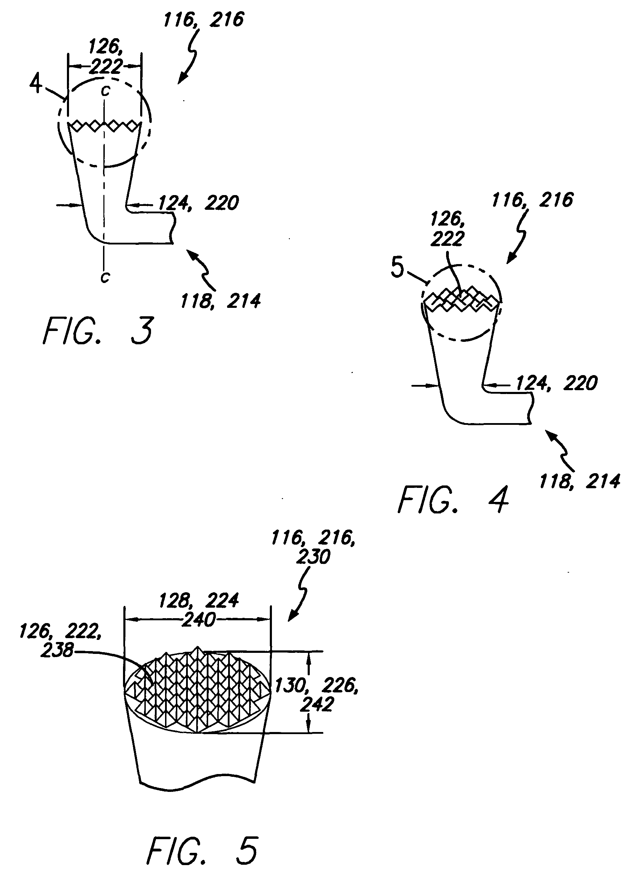

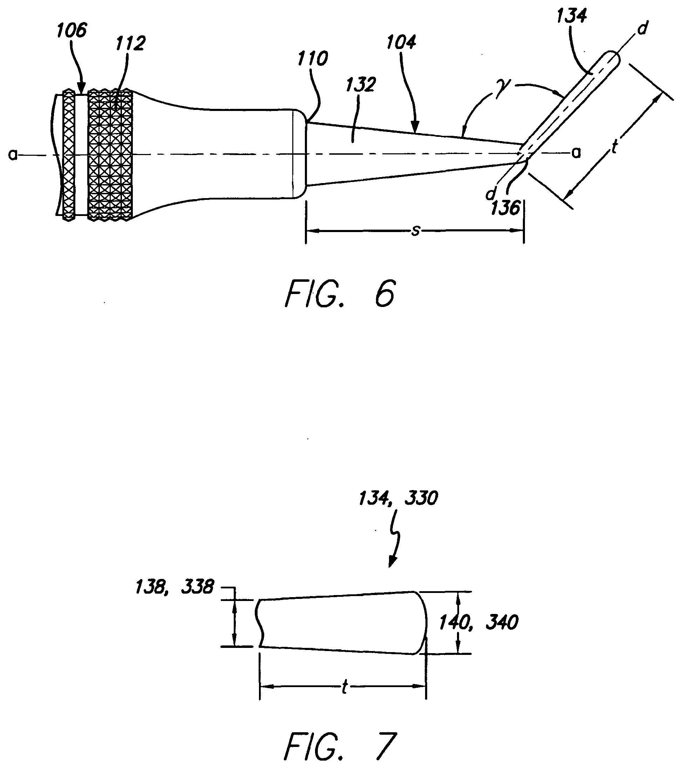

Referring now to Figure 1, Figure 2, Figure 3, Figure 4, Figure 5, Figure 6 and Figure 7, there are shown, respectively, a lateral perspective view of a device according to the present invention for placing and compacting root repair materials to fill root-end cavities during root-end surgery (Figure 1); a lateral perspective view of the first working section of the device shown in Figure 1 (Figure 2); close-up, partial, lateral perspective views of the distal part of the first working section of the device shown in Figure 1 and Figure 2 (Figure 3, Figure 4 and Figure 5); a lateral perspective view of the second working section of the device shown in Figure 1 (Figure 6); and a close-up, lateral perspective view of the distal part of the second working section of the device shown in Figure 1 and Figure 6 (Figure 7). The device 100 is particularly useful for placing and compacting root repair materials for root-end surgery to fill root-end cavities (endodontic cavities) during root-end surgery, and specifically for placing and compacting newer root repair materials to fill root-end cavities (endodontic cavities) in the upper and lower posterior teeth. As can be seen particularly in Figure 1, the device 100 comprises a first working section 102, a second working section 104 and an intermediate section 106 between the first working section 102 and the second working section 104, where the first working section 102 joins the intermediate section 106 at a first working section/intermediate section junction 108, and where the second working section 104 joins the intermediate section 106 at a second working section/intermediate section junction 110. The device 100 further comprises a primary axis a defining a total axial length n. In one embodiment, the total axial length n of the device 100 is between 100 mm and 250 mm. In a preferred embodiment, the total axial length n of the device 100 is between 150 mm and 200 mm. In another preferred embodiment, the total axial length n of the device 100 is between 160 mm and 180 mm. In a particularly preferred embodiment, the total axial length n is 164 mm.

The intermediate section 106 of the device 100 comprises a primary axis coincident the primary axis a of the device 100, and an axial length o along the primary axis a between the first working section/intermediate section junction 108 and the second working section/intermediate section junction 110. In one embodiment, the axial length o of the intermediate section 106 is between 50 mm and 200 mm. In a preferred embodiment, the axial length o of the intermediate section 106 is between 80 mm and 150 mm. In another preferred embodiment, the axial length o of the intermediate section 106 is between 100 mm and 120 mm. In a particularly preferred embodiment, the axial length o of the intermediate section 106 is 110 mm.

The intermediate section 106 further comprises a cross-sectional area perpendicular to the primary axis a (into the plane of Figure 1), where the cross-sectional area of the intermediate section 106 comprises an outer circumference defining an outer surface 112 of the intermediate section 106. In a preferred embodiment, the outer surface 112 of the intermediate section 106 comprises an uneven gripping surface to assist a user in manipulating the device 100. The uneven gripping surface can be any suitable surface for the intended purpose, as will be understood by those with skill in the art with respect to this disclosure, and can completely cover the outer surface 112 of the intermediate section 106 or can only partially cover the outer surface 112 of the intermediate section 106, as shown by example in Figure 1.

The first working section 102 of the device 100 is configured to compact root repair materials for root-end surgery to fill root-end cavities (endodontic cavities) during root-end surgery, and specifically for compacting newer root repair materials to fill root-end cavities (endodontic cavities), and is generally in the form of a hook with a serrated tip distally (as best seen in Figure 1 and Figure 2), and has dimensions suitable for use in conjunction with magnification under illumination, as will be understood by those with skill in the art with respect to this disclosure.

The first working section 102 of the device 100 comprises a proximal part 114, a distal part 116, and an intermediate part 118 between the proximal part 114 and the distal part 116. The proximal part 114 of the first working section 102 joins the intermediate section 106 of the device 100 to the intermediate part 118 of the first working section 102. The proximal part 114 of the first working section 102 joins the intermediate section 106 of the device 100 at the first working section/intermediate section junction 108. The proximal part 114 of the first working section 102 joins the intermediate part 118 of the first working section 102 of the device 100 at a proximal part of the first working section/intermediate part of the first working section junction 120. The proximal part 114 of the first working section 102 comprises a primary axis coincident the primary axis a of the device 100, and an axial length p along the primary axis a between the first working section/intermediate section junction 108 and proximal part of the first working section/intermediate part of the first working section junction 120. In one embodiment, the axial length p of the proximal part 114 of the first working section 102 is between 10 mm and 40 mm. In a preferred embodiment, the axial length p of the proximal part 114 of the first working section 102 is between 15 mm and 35 mm. In another preferred embodiment, the axial length p of the proximal part 114 of the first working section 102 is between 15 mm and 30 mm. In a particularly preferred embodiment, the axial length p of the proximal part 114 of the first working section 102 is 20 mm.

The intermediate part 118 of the first working section 102 joins the proximal part 114 of the first working section 102 to the distal part 116 of the first working section 102. The intermediate part 118 of the first working section 102 joins the proximal part 114 of the first working section 102 at the proximal part of the first working section/intermediate part of the first working section junction 120. The intermediate part 118 of the first working section 102 joins the distal part 116 of the first working section 102 at an intermediate part of the first working section/distal part of the first working section junction 122. The intermediate part 118 comprises a primary axis b which forms an angle α with the primary axis a of the device 100 (and of the proximal part 114 of the first working section 102), and comprises an axial length q along the primary axis b between the proximal part of the first working section/intermediate part of the first working section junction 120 and the intermediate part of the first working section/distal part of the first working section junction 122. In a preferred embodiment, the primary axis b is in the same plane as the primary axis a. In one embodiment, the angle α is between 90° and 160°. In a preferred embodiment, the angle α is between 100° and 150°. In another preferred embodiment, the angle α is between 110° and 140°. In a particularly preferred embodiment, the angle α is 135°. In one embodiment, the axial length q of the intermediate part 118 of the first working section 102 is between 5 mm and 20 mm. In a preferred embodiment, the axial length q of the intermediate part 118 of the first working section 102 is between 5 mm and 15 mm. In another preferred embodiment, the axial length q of the intermediate part 118 of the first working section 102 is between 5 mm and 10 mm. In a particularly preferred embodiment, the axial length q of the intermediate part 118 of the first working section 102 is 9 mm.

The distal part 116 of the first working section 102 joins the intermediate part 118 of the first working section 102 at the intermediate part of the first working section/distal part of the first working section junction 122. The distal part 116 of the first working section 102 comprises a proximal end 124 and a distal end 126. The distal part 116 of the first working section 102 further comprises a primary axis c which forms an angle β with the primary axis b of the intermediate part 118 of the first working section 102. In a preferred embodiment, the primary axis c is in the same plane as the primary axis a and the primary axis b. The distal part 116 of the first working section 102 further comprises an axial length r along the primary axis c between the intermediate part of the first working section/distal part of the first working section junction 122 and the distal end 126 of the distal part 116 of the first working section 102. In one embodiment, the angle β is between 75° and 105°. In a preferred embodiment, the angle β is between 80° and 100°. In another preferred embodiment, the angle β is between 85° and 95°. In a particularly preferred embodiment, the angle β is 90°. In one embodiment, the axial length r of the distal part 116 of the first working section 102 is between 2 mm and 10 mm. In a preferred embodiment, the axial length r of the distal part 116 of the first working section 102 is between 2 mm and 8 mm. In another preferred embodiment, the axial length r of the distal part 116 of the first working section 102 is between 2 mm and 6 mm. In a particularly preferred embodiment, the axial length r of the distal part 116 of the first working section 102 is 5 mm.

The proximal end 124 of the distal part 116 of the first working section 102 comprises a cross-sectional diameter perpendicular to the primary axis c. In one embodiment, the cross-sectional diameter of the proximal end 124 of the distal part 116 of the first working section 102 is between 0.3 mm and 0.7 mm. In one embodiment, the cross-sectional diameter of the proximal end 124 of the distal part 116 of the first working section 102 is between 0.4 mm and 0.6 mm. In another embodiment, the cross-sectional diameter of the proximal end 124 of the distal part 116 of the first working section 102 is 0.5 mm.

In a preferred embodiment, the distal end 126 of the distal part 116 of the first working section 102 forms an oval shape (as shown most clearly in Figure 5) when viewed into the primary axis c of the distal part 116 of the first working section 102. The distal end 126 has a greater lateral axis 128 comprising a midpoint and a lesser lateral axis 130 comprising a midpoint, where the greater lateral axis 128 is perpendicular to and longer than the lesser lateral axis 130, and where the midpoint of the greater lateral axis 128 crosses the midpoint of the lesser lateral axis 130. In one embodiment, the greater lateral axis 128 of the distal end 126 is between 0.3 mm and 1.5 mm. In another embodiment, the greater lateral axis 128 of the distal end 126 is between 0.5 mm and 1.0 mm. In a preferred embodiment, the greater lateral axis 128 of the distal end 126 is 0.7 mm. In one embodiment, the lesser lateral axis 130 of the distal end 126 is between 0.25 mm and 1.0 mm. In another embodiment, the lesser lateral axis 130 of the distal end 126 is between 0.3 mm and 0.8 mm. In another embodiment, the lesser lateral axis 130 of the distal end 126 is 0.5 mm.

Referring again particularly to Figure 2, Figure 3, Figure 4 and Figure 5, the distal end 126 of the distal part 116 of the first working section 102 further comprises a serrated surface in the form of a plurality of raised pyramidal structures covering the distal end 126 as shown. The serrated surface of the distal end 126 of the distal part 116 of the first working section 102 advantageously prevents root filling material from adhering to the distal part 116 of the first working section 102, thereby allowing the root filing material to compact and condense in the root-end cavities (endodontic cavities).

Referring again to Figure 1, Figure 6 and Figure 7, the device 100 comprises a second working section 104. The second working section 104 is configured to carry and place root repair materials for root-end surgery to fill root-end cavities (endodontic cavities) during root-end surgery, and specifically for carrying and placing newer root repair materials to fill root-end cavities (endodontic cavities), and is generally in the form of a flat blade distally widening proximally to distally (as best seen in Figure 6 and Figure 7), and has dimensions suitable for use in conjunction with magnification under illumination, as will be understood by those with skill in the art with respect to this disclosure.

The second working section 104 comprises a proximal part 132 of the second working section 104 and a distal part 134 of the second working section 104. The proximal part 132 of the second working section 104 joins the intermediate section 106 of the device 100 at a second working section/intermediate section junction 110, and the proximal part 132 of the second working section 104 joins the distal part 134 of the second working section 104 at a proximal part of the second working section/distal part of the second working section junction 136.

The proximal part 132 of the second working section 104 comprises a primary axis coincident the primary axis a of the device 100, and an axial length s along the primary axis a between the second working section/intermediate section junction 110 and the proximal part of the second working section/distal part of the second working section junction 136. In one embodiment, the axial length s of the proximal part 132 of the second working section 104 is between 10 mm and 40 mm. In a preferred embodiment, the axial length s of the proximal part 132 of the second working section 104 is between 15 mm and 35 mm. In another preferred embodiment, the axial length s of the proximal part 132 of the second working section 104 is between 15 mm and 30 mm. In a particularly preferred embodiment, the axial length s of the proximal part 132 of the second working section 104 is 20 mm.

The distal part 134 of the second working section 104 comprises a proximal end 138 and a distal end 140. The proximal end 138 of the distal part 134 of the second working section 104 joins the proximal part 132 of the second working section 104 at the proximal part of the second working section/distal part of the second working section junction 136. The distal part 134 of the second working section 104 comprises a primary axis d which forms an angle γ with the primary axis a of the device 100. The distal part 134 of the second working section 104 further comprises an axial length t along the primary axis d between the proximal part of the second working section/distal part of the second working section junction 136 and the distal end 140 of the distal part 134 of second working section 104. In a preferred embodiment, the primary axis d is in the same plane as the primary axis a, the primary axis b and the primary axis c. In one embodiment, the angle γ is between 90° and 160°. In a preferred embodiment, the angle γ is between 100° and 150°. In another preferred embodiment, the angle γ is between 110° and 140°. In a particularly preferred embodiment, the angle γ is 135°. In one embodiment, the axial length t of the distal part 134 of the second working section 104 is between 2 mm and 10 mm. In a preferred embodiment, the axial length t of the distal part 134 of the second working section 104 is between 2 mm and 8 mm. In another preferred embodiment, the axial length t of the distal part 134 of the second working section 104 is between 2 mm and 6 mm. In a particularly preferred embodiment, the axial length t of the distal part 134 of the second working section 104 is 5 mm.

The proximal end 138 of the distal part 134 of the second working section 104 comprises a cross-sectional diameter perpendicular to the primary axis d of the distal part 134 of the second working section 104. In one embodiment, the cross-sectional diameter of proximal end 138 of the distal part 134 of the second working section 104 is between 0.2 mm and 0.8 mm. In another embodiment, the cross-sectional diameter of proximal end 138 of the distal part 134 of the second working section 104 is between 0.3 mm and 0.6 mm. In another embodiment, the cross-sectional diameter of proximal end 138 of the distal part 134 of the second working section 104 is between 0.3 mm and 0.5 mm. In another embodiment, the cross-sectional diameter of proximal end 138 of the distal part 134 of the second working section 104 is 0.4 mm.

The distal end 140 of the distal part 134 of the second working section 104 comprises a cross-sectional diameter perpendicular to the primary axis d of the distal part 134 of the second working section 104. In one embodiment, the cross-sectional diameter of distal end 140 of the distal part 134 of the second working section 104 is between 0.2 mm and 0.8 mm. In another embodiment, the cross-sectional diameter of distal end 140 of the distal part 134 of the second working section 104 is between 0.3 mm and 0.7 mm. In another embodiment, the cross-sectional diameter of distal end 140 of the distal part 134 of the second working section 104 is between 0.4 mm and 0.6 mm. In another embodiment, the cross-sectional diameter of distal end 140 of the distal part 134 of the second working section 104 is 0.5 mm.

In a particularly preferred embodiment, the device 100 has an angle α of 45°, an angle β of 90°, an angle γ of 135°, a total axial length n of the device 100 of 164 mm, an axial length o of the intermediate section 106 of 110 mm, an axial length p of the proximal part 114 of the first working section 102 of 20 mm, an axial length q of the intermediate part 118 of the first working section 102 of 9 mm, an axial length r of the distal part 116 of the first working section 102 of 5 mm, an axial length s of the proximal part 132 of the second working section 104 of 20 mm, an axial length t of the distal part 134 of the second working section 104 of 20 mm, a greater lateral axis 128 of the distal end 126 of 0.7 mm and a lesser lateral axis 130 of the distal end 126 of 0.5 mm. This configuration is particularly advantageous in that it allows better accessibility and condensation of the root filling material, allows the compaction of the root filing material within the endodontic cavity more effectively, and provides the appropriate working distance for superior accessibility and space for unobstructed visibility of the working field, as will be understood by those with skill in the art with respect to this disclosure.

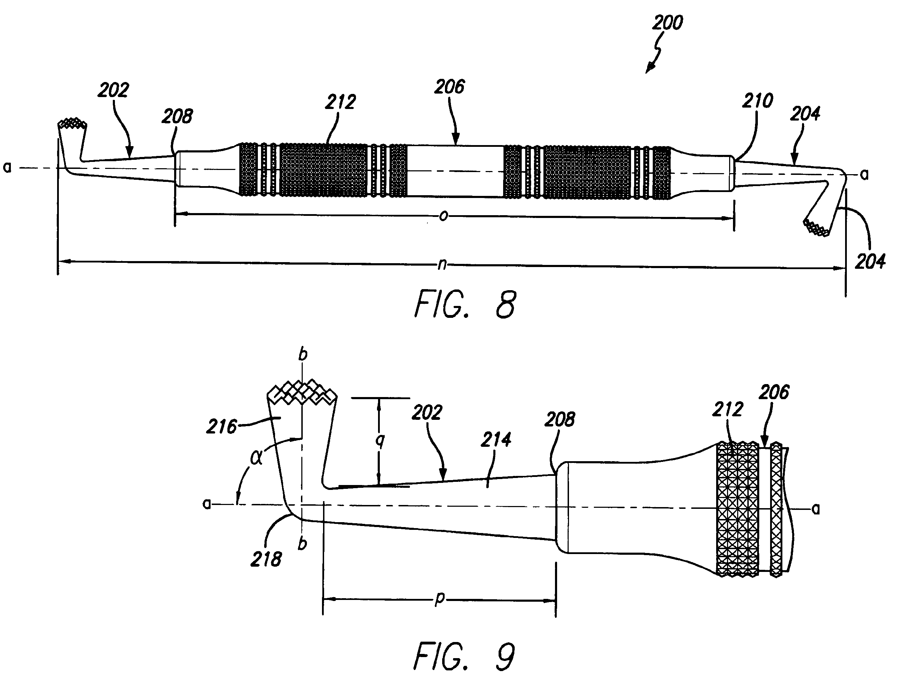

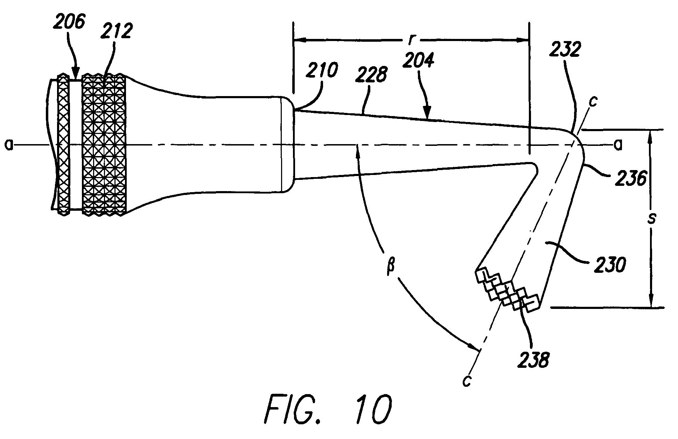

Referring now to Figure 8, Figure 9 and Figure 10, there are shown, respectively, a lateral perspective view of a device for placing and compacting root repair materials to fill root-end cavities during root-end surgery (Figure 8); a close-up, lateral perspective view of the first working section of the device shown in Figure 8 (Figure 9); and a close-up, lateral perspective view of the second working section of the device shown in Figure 8 (Figure 10). The device 200 is particularly useful for placing and compacting root repair materials for root-end surgery to fill root-end cavities (endodontic cavities) during root-end surgery, and specifically for placing and compacting newer root repair materials to fill root-end cavities (endodontic cavities) in the upper and lower anterior teeth. As can be seen particularly in Figure 8, the device 200 comprises a first working section 202, a second working section 204 and an intermediate section 206 between the first working section 202 and the second working section 204, where the first working section 202 joins the intermediate section 206 at a first working section/intermediate section junction 208, and where the second working section 204 joins the intermediate section 206 at a second working section/intermediate section junction 210. The device 200 further comprises a primary axis a defining a total axial length n. In one embodiment, the total axial length n of the device 200 is between 200 mm and 250 mm. In a preferred embodiment, the total axial length n of the device 200 is between 150 mm and 200 mm. In another preferred embodiment, the total axial length n of the device 200 is between 160 mm and 180 mm. In a particularly preferred embodiment, the total axial length n is 164 mm.

The intermediate section 206 of the device 200 comprises a primary axis coincident the primary axis a of the device 200, and an axial length o along the primary axis a between the first working section/intermediate section junction 208 and the second working section/intermediate section junction 210. In one embodiment, the axial length o of the intermediate section 206 is between 50 mm and 200 mm. In a preferred embodiment, the axial length o of the intermediate section 206 is between 80 mm and 150 mm. In another preferred embodiment, the axial length o of the intermediate section 206 is between 100 mm and 120 mm. In a particularly preferred embodiment, the axial length o of the intermediate section 206 is 110 mm.

The intermediate section 206 further comprises a cross-sectional area perpendicular to the primary axis a (into the plane of Figure 8), where the cross-sectional area of the intermediate section 206 comprises an outer circumference defining an outer surface 212 of the intermediate section 206. In a preferred embodiment, the outer surface 212 of the intermediate section 206 comprises an uneven gripping surface to assist a user in manipulating the device 200. The uneven gripping surface can be any suitable surface for the intended purpose, as will be understood by those with skill in the art with respect to this disclosure, and can completely cover the outer surface 212 of the intermediate section 206 or can only partially cover the outer surface 212 of the intermediate section 206, as shown by example in Figure 8.

The first working section 202 of the device 200 is configured to compact root repair materials for root-end surgery to fill root-end cavities (endodontic cavities) during root-end surgery, and specifically for compacting newer root repair materials to fill root-end cavities (endodontic cavities), and comprises a serrated tip distally (as best seen in Figure 8 and Figure 9), and has dimensions suitable for use in conjunction with magnification under illumination, as will be understood by those with skill in the art with respect to this disclosure.

The first working section 202 of the device 200 comprises a proximal part 214 and a distal part 216. The proximal part 214 of the first working section 202 joins the intermediate section 206 of the device 200 to the distal part 216 of the first working section 202. The proximal part 214 of the first working section 202 joins the intermediate section 206 of the device 200 at the first working section/intermediate section junction 208. The proximal part 214 of the first working section 202 joins the distal part 216 of the second working section 204 of the device 200 at a proximal part of the first working section/distal part of the first working section junction 218. The proximal part 214 of the first working section 202 comprises a primary axis coincident the primary axis a of the device 200, and an axial length p along the primary axis a between the first working section/intermediate section junction 208 and proximal part of the first working section/distal part of the first working section junction 218. In one embodiment, the axial length p of the proximal part 214 of the first working section 202 is between 10 mm and 40 mm. In a preferred embodiment, the axial length p of the proximal part 214 of the first working section 202 is between 15 mm and 35 mm. In another preferred embodiment, the axial length p of the proximal part 214 of the first working section 202 is between 15 mm and 30 mm. In a particularly preferred embodiment, the axial length p of the proximal part 214 of the first working section 202 is 20 mm.

The distal part 216 of the first working section 202 joins the proximal part 214 of the first working section 202 at the proximal part of the first working section/distal part of the first working section junction 218. The distal part 216 of the first working section 202 comprises a proximal end 220 and a distal end 222. The distal part 216 of the first working section 202 further comprises a primary axis b which forms an angle α with the primary axis a of the proximal part 214 of the first working section 202. In a preferred embodiment, the primary axis b is in the same plane as the primary axis a. The distal part 216 of the first working section 202 further comprises an axial length q along the primary axis b between the proximal part of the first working section/distal part of the first working section junction 218 and the distal end 222 of the distal part 216 of the first working section 202. In one embodiment, the angle α is between 75° and 105°. In a preferred embodiment, the angle α is between 80 and 100°. In another preferred embodiment, the angle α is between 85° and 95°. In a particularly preferred embodiment, the angle α is 90°. In one embodiment, the axial length q of the distal part 216 of the first working section 202 is between 1.5 mm and 7 mm. In a preferred embodiment, the axial length q of the distal part 216 of the first working section 202 is between 2 mm and 6 mm. In another preferred embodiment, the axial length q of the distal part 216 of the first working section 202 is between 3 mm and 5 mm. In a particularly preferred embodiment, the axial length q of the distal part 216 of the first working section 202 is 4 mm.

In a preferred embodiment, the distal end 222 of the distal part 216 of the first working section 202 forms an oval shape when viewed into the primary axis b of the distal part 216 of the first working section 202. The distal end 222 has a greater lateral axis 224 comprising a midpoint and a lesser lateral axis 226 comprising a midpoint, where the greater lateral axis 224 is perpendicular to and longer than the lesser lateral axis 226, and where the midpoint of the greater lateral axis 224 crosses the midpoint of the lesser lateral axis 226. In one embodiment, the greater lateral axis 224 of the distal end 222 is between 0.3 mm and 3 mm. In another embodiment, the greater lateral axis 224 of the distal end 222 is between 0.5 mm and 2 mm. In another embodiment, the greater lateral axis 224 of the distal end 222 is between 0.7 mm and 1.5. In one embodiment, the lesser lateral axis 226 of the distal end 222 is between 0.25 mm and 2 mm. In another embodiment, the lesser lateral axis 226 of the distal end 222 is between 0.4 mm and 1.5 mm. In another embodiment, the lesser lateral axis 226 of the distal end 222 is between 0.5 mm and 1 mm.

Referring again particularly to Figure 8 and Figure 9, the distal end 222 of the distal part 216 of the first working section 202 further comprises a serrated surface in the form of a plurality of raised pyramidal structures covering the distal end 222 as shown. The serrated surface of the distal end 222 of the distal part 216 of the first working section 202 advantageously prevents root filling material from adhering to the distal part 216 of the first working section 202, thereby allowing the root filing material to compact and condense in the root-end cavities (endodontic cavities).

Referring again to Figure 8 and Figure 10, the device 200 comprises a second working section 204. Like the first working section 202, the second working section 204 of the device 200 is configured to compact root repair materials for root-end surgery to fill root-end cavities (endodontic cavities) during root-end surgery, and specifically for compacting newer root repair materials to fill root-end cavities (endodontic cavities), and comprises a serrated tip distally, and has dimensions suitable for use in conjunction with magnification under illumination, as will be understood by those with skill in the art with respect to this disclosure. The slightly different configurations between the first working section 202 and the second working section 204 are useful in circumstances of varying patient anatomy, as will be understood by those with skill in the art with respect to this disclosure.

The second working section 204 of the device 200 comprises a proximal part 228 and a distal part 230. The proximal part 228 of the second working section 204 joins the intermediate section 206 of the device 200 to the distal part 230 of the second working section 204. The proximal part 228 of the second working section 204 joins the intermediate section 206 of the device 200 at the second working section/intermediate section junction 210. The proximal part 228 of the second working section 204 joins the distal part 230 of the second working section 204 of the device 200 at a proximal part of the second working section/distal part of the second working section junction 232. The proximal part 228 of the second working section 204 comprises a primary axis coincident the primary axis a of the device 200, and an axial length r along the primary axis a between the second working section/intermediate section junction 210 and proximal part of the second working section/distal part of the second working section junction 232. In one embodiment, the axial length r of the proximal part 228 of the second working section 204 is between 10 mm and 40 mm. In a preferred embodiment, the axial length r of the proximal part 228 of the second working section 204 is between 15 mm and 35 mm. In another preferred embodiment, the axial length r of the proximal part 228 of the second working section 204 is between 15 mm and 25 mm. In a particularly preferred embodiment, the axial length r of the proximal part 228 of the second working section 204 is 20 mm.

The distal part 230 of the second working section 204 joins the proximal part 228 of the second working section 204 at the proximal part of the second working section/distal part of the second working section junction 232. The distal part 230 of the second working section 204 comprises a proximal end 236 and a distal end 238. The distal part 230 of the second working section 204 further comprises a primary axis c which forms an angle β with the primary axis a of the proximal part 228 of the second working section 204. In a preferred embodiment, the primary axis c is in the same plane as the primary axis a and the primary axis b. The distal part 230 of the second working section 204 further comprises an axial length s along the primary axis c between the proximal part of the second working section/distal part of the second working section junction 232 and the distal end 238 of the distal part 230 of the second working section 204. In one embodiment, the angle β is between 50° and 150°. In a preferred embodiment, the angle β is between 50° and 100°. In another preferred embodiment, the angle β is between 60° and 80°. In a particularly preferred embodiment, the angle β is 70°. In one embodiment, the axial length s of the distal part 230 of the second working section 204 is between 2 mm and 10 mm. In a preferred embodiment, the axial length s of the distal part 230 of the second working section 204 is between 3 mm and 8 mm. In another preferred embodiment, the axial length s of the distal part 230 of the second working section 204 is between 4 mm and 6 mm. In a particularly preferred embodiment, the axial length s of the distal part 230 of the second working section 204 is 5 mm.

In a preferred embodiment, the distal end 238 of the distal part 230 of the second working section 204 forms an oval shape when viewed into the primary axis c of the distal part 230 of the second working section 204. The distal end 238 has a greater lateral axis 240 comprising a midpoint and a lesser lateral axis 242 comprising a midpoint, where the greater lateral axis 240 is perpendicular to and longer than the lesser lateral axis 242, and where the midpoint of the greater lateral axis 240 crosses the midpoint of the lesser lateral axis 242, corresponding to the elements in the distal end 238 222 of the first working section 202. In one embodiment, the greater lateral axis 240 of the distal end 238 is between 0.3 mm and 3 mm. In another embodiment, the greater lateral axis 240 of the distal end 238 is between 0.5 mm and 2 mm. In another embodiment, the greater lateral axis 240 of the distal end 238 is between 0.7 mm and 1.5. In one embodiment, the lesser lateral axis 242 of the distal end 238 is between 0.25 mm and 2 mm. In another embodiment, the lesser lateral axis 242 of the distal end 238 is between 0.4 mm and 1.5 mm. In another embodiment, the lesser lateral axis 242 of the distal end 238 is between 0.5 mm and 1 mm.

Referring again particularly to Figure 8 and Figure 10, the distal end 238 of the distal part 230 of the second working section 204 further comprises a serrated surface in the form of a plurality of raised pyramidal structures covering the distal end 238 as shown. The serrated surface of the distal end 238 of the distal part 230 of the second working section 204 advantageously prevents root filling material from adhering to the distal part 230 of the second working section 204, thereby allowing the root filing material to compact and condense in the root-end cavities (endodontic cavities).

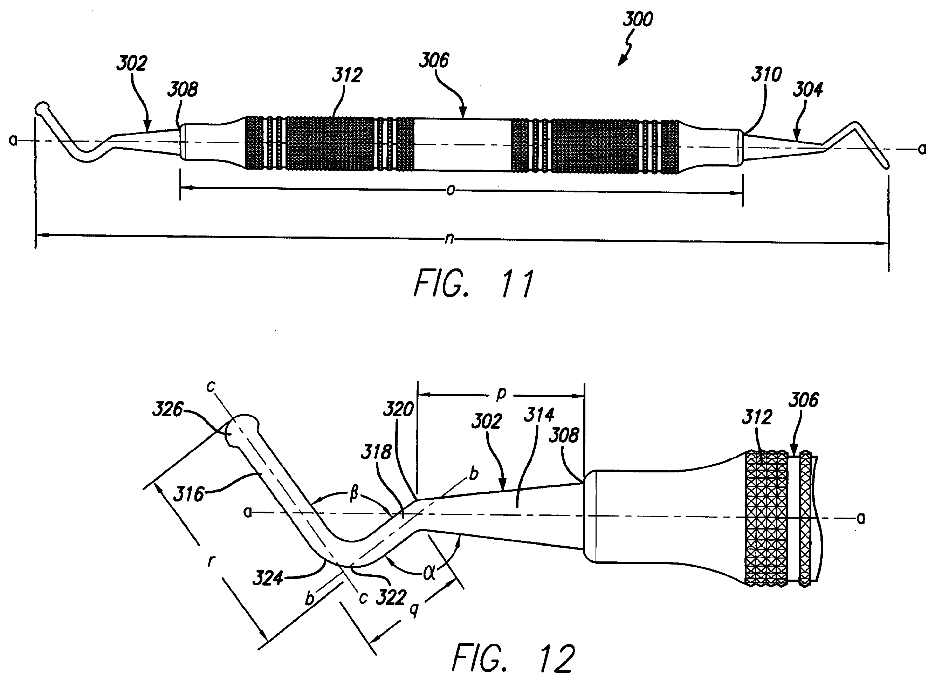

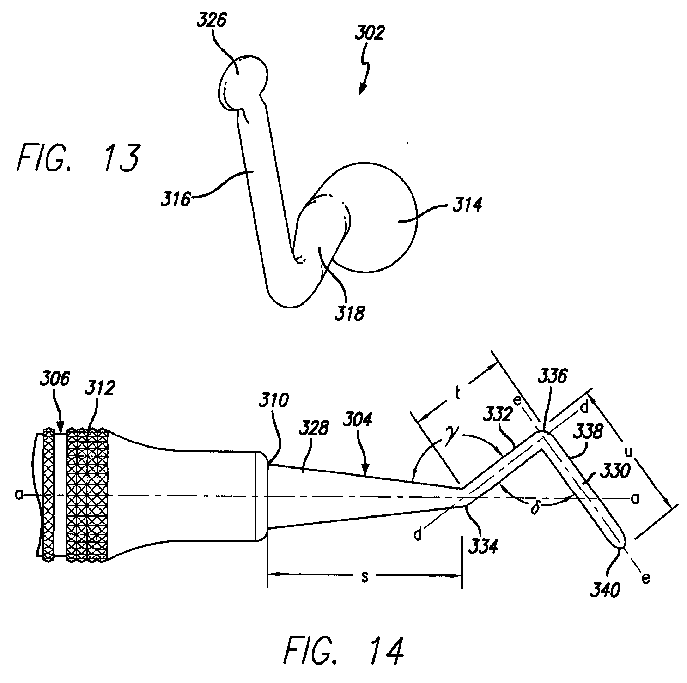

Referring now to Figure 11, Figure 12, Figure 13 and Figure 14, there are shown, respectively, a lateral perspective view of another device not according to the invention for placing and burnishing root repair materials for root-end surgery to fill root-end cavities (endodontic cavities) during root-end surgery (Figure 11); a close-up, lateral perspective view of the first working section of the device shown in Figure 11 (Figure 12); a close-up, frontal-lateral perspective view of the first working section of the device shown in Figure 11 (Figure 13); and a close-up, lateral perspective view of the second working section of the device shown in Figure 11. As can be seen particularly in Figure 11, the device 300 comprises a first working section 302, a second working section 304 and an intermediate section 306 between the first working section 302 and the second working section 304.

The device 300 is particularly useful for placing and burnishing root repair materials for root-end surgery to fill root-end cavities (endodontic cavities) during root-end surgery, and specifically for placing and burnishing newer root repair materials to fill root-end cavities (endodontic cavities). As can be seen particularly in Figure 11, the device 300 comprises a first working section 302, a second working section 304 and an intermediate section 306 between the first working section 302 and the second working section 304, where the first working section 302 joins the intermediate section 306 at a first working section/intermediate section junction 308, and where the second working section 304 joins the intermediate section 306 at a second working section/intermediate section junction 310. The device 300 further comprises a primary axis a defining a total axial length n. In one embodiment, the total axial length n of the device 300 is between 100 mm and 250 mm. In a preferred embodiment, the total axial length n of the device 300 is between 150 mm and 200 mm. In another preferred embodiment, the total axial length n of the device 300 is between 160 mm and 180 mm. In a particularly preferred embodiment, the total axial length n is 164 mm.

The intermediate section 306 of the device 300 comprises a primary axis coincident the primary axis a of the device 100, and an axial length o along the primary axis a between the first working section/intermediate section junction 308 and the second working section/intermediate section junction 310. In one embodiment, the axial length o of the intermediate section 306 is between 50 mm and 200 mm. In a preferred embodiment, the axial length o of the intermediate section 306 is between 80 mm and 150 mm. In another preferred embodiment, the axial length o of the intermediate section 306 is between 100 mm and 120 mm. In a particularly preferred embodiment, the axial length o of the intermediate section 306 is 110 mm.

The intermediate section 306 further comprises a cross-sectional area perpendicular to the primary axis a (into the plane of Figure 11), where the cross-sectional area of the intermediate section 306 comprises an outer circumference defining an outer surface 312 of the intermediate section 306. In a preferred embodiment, the outer surface 312 of the intermediate section 306 comprises an uneven gripping surface to assist a user in manipulating the device 300. The uneven gripping surface can be any suitable surface for the intended purpose, as will be understood by those with skill in the art with respect to this disclosure, and can completely cover the outer surface 312 of the intermediate section 306 or can only partially cover the outer surface 312 of the intermediate section 306, as shown by example in Figure 11.

The first working section 302 of the device 300 is configured to burnish root repair materials for root-end surgery used to fill root-end cavities (endodontic cavities) during root-end surgery, and specifically for burnishing newer root repair materials used to fill root-end cavities (endodontic cavities), and has dimensions suitable for use in conjunction with magnification under illumination, as will be understood by those with skill in the art with respect to this disclosure.

The first working section 302 of the device 300 comprises a proximal part 314, a distal part 316, and an intermediate part 318 between the proximal part 314 and the distal part 316. The proximal part 314 of the first working section 302 joins the intermediate section 306 of the device 300 to the intermediate part 318 of the first working section 302. The proximal part 314 of the first working section 302 joins the intermediate section 306 of the device 300 at the first working section/intermediate section junction 308. The proximal part 314 of the first working section 302 joins the intermediate part 318 of the first working section 302 of the device 300 at a proximal part of the first working section/intermediate part of the first working section junction 320. The proximal part 314 of the first working section 302 comprises a primary axis coincident the primary axis a of the device 300, and an axial length p along the primary axis a between the first working section/intermediate section junction 308 and proximal part of the first working section/intermediate part of the first working section junction 320. In one embodiment, the axial length p of the proximal part 314 of the first working section 302 is between 2 mm and 20 mm. In a preferred embodiment, the axial length p of the proximal part 314 of the first working section 302 is between 4 mm and 15 mm. In another preferred embodiment, the axial length p of the proximal part 314 of the first working section 302 is between 5 mm and 10 mm. In a particularly preferred embodiment, the axial length p of the proximal part 314 of the first working section 302 is 7 mm.

The intermediate part 318 of the first working section 302 joins the proximal part 314 of the first working section 302 to the distal part 316 of the first working section 302. The intermediate part 318 of the first working section 302 joins the proximal part 314 of the first working section 302 at the proximal part of the first working section/intermediate part of the first working section junction 320. The intermediate part 318 of the first working section 302 joins the distal part 316 of the first working section 302 at an intermediate part of the first working section/distal part of the first working section junction 322. The intermediate part 318 comprises a primary axis b which forms an angle α with the primary axis a of the device 300 (and of the proximal part 314 of the first working section 302), and comprises an axial length q along the primary axis b between the proximal part of the first working section/intermediate part of the first working section junction 320 and an intermediate part of the first working section/distal part of the first working section junction 322. In a preferred embodiment, the primary axis b is in the same plane as the primary axis a. In one embodiment, the angle α is between 100° and 170°. In a preferred embodiment, the angle α is between 110° and 165°. In another preferred embodiment, the angle α is between 130° and 160°. In a particularly preferred embodiment, the angle α is 150°. In one embodiment, the axial length q of the intermediate part 318 of the first working section 302 is between 5 mm and 30 mm. In a preferred embodiment, the axial length q of the intermediate part 318 of the first working section 302 is between 6 mm and 20 mm. In another preferred embodiment, the axial length q of the intermediate part 318 of the first working section 302 is between 8 mm and 15 mm. In a particularly preferred embodiment, the axial length q of the intermediate part 318 of the first working section 302 is 10 mm.

The distal part 316 of the first working section 302 joins the intermediate part 318 of the first working section 302 at the intermediate part of the first working section/distal part of the first working section junction 322. The distal part 316 of the first working section 302 comprises a proximal end 324 and a distal end 326. The distal part 316 of the first working section 302 further comprises a primary axis c which forms an angle β with the primary axis b of the intermediate part 318 of the first working section 302. In a preferred embodiment, the primary axis c is in the same plane as the primary axis a and the primary axis b. The distal part 316 of the first working section 302 further comprises an axial length r along the primary axis c between the intermediate part of the first working section/distal part of the first working section junction 322 and the distal end 326 of the distal part 316 of the first working section 302. In one embodiment, the angle β is between 90° and 150°. In a preferred embodiment, the angle β is between 100° and 140°. In another preferred embodiment, the angle β is between 110° and 130°. In a particularly preferred embodiment, the angle β is 120°. In one embodiment, the axial length r of the distal part 316 of the first working section 302 is between 1.5 mm and 10 mm. In a preferred embodiment, the axial length r of the distal part 316 of the first working section 302 is between 2 mm and 8 mm. In another preferred embodiment, the axial length r of the distal part 316 of the first working section 302 is between 3 mm and 7 mm. In a particularly preferred embodiment, the axial length r of the distal part 316 of the first working section 302 is 5 mm.

The proximal end 324 of the distal part 316 of the first working section 302 comprises a cross-sectional diameter perpendicular to the primary axis c. In one embodiment, the cross-sectional diameter of the proximal end 324 of the distal part 316 of the first working section 302 is between 0.2 mm and 1 mm. In one embodiment, the cross-sectional diameter of the proximal end 324 of the distal part 316 of the first working section 302 is between 0.2 mm and 0.8 mm. In another embodiment, the cross-sectional diameter of the proximal end 324 of the distal part 316 of the first working section 302 is between 0.3 and 0.4 mm.

In a preferred embodiment, the distal end 326 of the distal part 316 of the first working section 302 forms a round or an oval shape (as shown most clearly in Figure 12 and Figure 13) perpendicular to the primary axis c of the distal part 316 of the first working section 302 when viewed from the lateral perspective. This shape is particularly useful for burnishing root repair materials for root-end surgery to fill root-end cavities (endodontic cavities) during root-end surgery, and specifically for placing and burnishing newer root repair materials to fill root-end cavities (endodontic cavities). In one embodiment, the distal end 326 has a proximal to distal dimension of between 0.3 and 0.6 mm. In another embodiment, the distal end 326 has a proximal to distal dimension of between 0.4 and 0.5 mm. In one embodiment, the distal end 326 has a lateral dimension perpendicular to the primary axis c of between 0.3 and 0.6 mm. In another embodiment, the distal end 326 has a lateral dimension perpendicular to the primary axis c of between 0.4 and 0.5 mm. In a preferred embodiment, the distal end 326 has a proximal to distal dimension of between 0.5 and a lateral dimension of 0.4 mm.

Referring again to Figure 7, Figure 11 and Figure 14, the device 300 comprises a second working section 304. The second working section 304 is configured to carry and place root repair materials for root-end surgery to fill root-end cavities (endodontic cavities) during root-end surgery, and specifically for carrying and placing newer root repair materials to fill root-end cavities (endodontic cavities), and is generally in the form of a flat blade distally widening proximally to distally (as best seen in Figure 7 and Figure 14), and has dimensions suitable for use in conjunction with magnification under illumination, as will be understood by those with skill in the art with respect to this disclosure.

The second working section 304 of the device 300 comprises a proximal part 328, a distal part 330, and an intermediate part 332 between the proximal part 328 and the distal part 330. The proximal part 328 of the second working section 304 joins the intermediate section 306 of the device 300 to the intermediate part 332 of the second working section 304. The proximal part 328 of the second working section 304 joins the intermediate section 306 of the device 300 at the second working section/intermediate section junction 310. The proximal part 328 of the second working section 304 joins the intermediate part 332 of the second working section 304 of the device 300 at a proximal part of the second working section/intermediate part of the second working section junction 334. The proximal part 328 of the second working section 304 comprises a primary axis coincident the primary axis a of the device 300, and an axial length s along the primary axis a between the second working section/intermediate section junction 310 and proximal part of the second working section/intermediate part of the second working section junction 334. In one embodiment, the axial length s of the proximal part 328 of the second working section 304 is between 2 mm and 20 mm. In a preferred embodiment, the axial length s of the proximal part 328 of the second working section 304 is between 4 mm and 15 mm. In another preferred embodiment, the axial length s of the proximal part 328 of the second working section 304 is between 5 mm and 10 mm. In a particularly preferred embodiment, the axial length s of the proximal part 328 of the second working section 304 is 7 mm.

The intermediate part 332 of the second working section 304 joins the proximal part 328 of the second working section 304 to the distal part 330 of the second working section 304. The intermediate part 332 of the second working section 304 joins the proximal part 328 of the second working section 304 at the proximal part of the second working section/intermediate part of the second working section junction 334. The intermediate part 332 of the second working section 304 joins the distal part 330 of the second working section 304 at the intermediate part of the second working section/distal part of the second working section junction 336. The intermediate part 332 comprises a primary axis d which forms an angle γ with the primary axis a of the device 300 (and of the proximal part 328 of the second working section 304), and comprises an axial length t along the primary axis d between the proximal part of the second working section/intermediate part of the second working section junction 334 and the intermediate part of the second working section/distal part of the second working section junction 336. In a preferred embodiment, the primary axis d is in the same plane as the primary axis a. In one embodiment, the angle γ is between 100° and 170°. In a preferred embodiment, the angle γ is between 110° and 165°. In another preferred embodiment, the angle γ is between 130° and 160°. In a particularly preferred embodiment, the angle γ is 150°. In one embodiment, the axial length t of the intermediate part 332 of the second working section 304 is between 2 mm and 30 mm. In a preferred embodiment, the axial length t of the intermediate part 332 of the second working section 304 is between 5 mm and 20 mm. In another preferred embodiment, the axial length t of the intermediate part 332 of the second working section 304 is 10 mm.

The distal part 330 of the second working section 304 joins the intermediate part 332 of the second working section 304 at the intermediate part of the second working section/distal part of the second working section junction 336. The distal part 330 of the second working section 304 comprises a proximal end 338 and a distal end 340. The distal part 330 of the second working section 304 further comprises a primary axis e which forms an angle δ with the primary axis d of the intermediate part 332 of the second working section 304. In a preferred embodiment, the primary axis e is in the same plane as the primary axis a and the primary axis d. The distal part 330 of the second working section 304 further comprises an axial length u along the primary axis e between the intermediate part of the second working section/distal part of the second working section junction 336 and the distal end 340 of the distal part 330 of the second working section 304. In one embodiment, the angle δ is between 75° and 105°. In a preferred embodiment, the angle δ is between 80° and 100°. In another preferred embodiment, the angle δ is between 85° and 95°. In a particularly preferred embodiment, the angle δ is 90°. In one embodiment, the axial length u of the distal part 330 of the second working section 304 is between 1.5 mm and 10 mm. In a preferred embodiment, the axial length u of the distal part 330 of the second working section 304 is between 2 mm and 8 mm. In another preferred embodiment, the axial length u of the distal part 330 of the second working section 304 is between 3 mm and 7 mm. In a particularly preferred embodiment, the axial length u of the distal part 330 of the second working section 304 is 5 mm.

The proximal end 338 of the distal part 330 of the second working section 304 comprises a cross-sectional diameter perpendicular to the primary axis e of the distal part 330 of the second working section 304. In one embodiment, the cross-sectional diameter of proximal end 338 of the distal part 330 of the second working section 304 is between 0.2 mm and 0.8 mm. In another embodiment, the cross-sectional diameter of proximal end 338 of the distal part 330 of the second working section 304 is between is between 0.3 mm and 0.6 mm. In another embodiment, the cross-sectional diameter of proximal end 338 of the distal part 330 of the second working section 304 is between 0.3 mm and 0.5 mm. In another embodiment, the cross-sectional diameter of proximal end 338 of the distal part 330 of the second working section 304 is 0.4 mm.

The distal end 340 of the distal part 330 of the second working section 304 comprises a cross-sectional diameter perpendicular to the primary axis d of the distal part 330 of the second working section 304. In one embodiment, the cross-sectional diameter of distal end 340 of the distal part 330 of the second working section 304 is between 0.2 mm and 0.8 mm. In another embodiment, the cross-sectional diameter of distal end 340 of the distal part 330 of the second working section 304 is between 0.3 mm and 0.7 mm. In another embodiment, the cross-sectional diameter of distal end 340 of the distal part 330 of the second working section 304 is between 0.4 mm and 0.6 mm. In another embodiment, the cross-sectional diameter of distal end 340 of the distal part 330 of the second working section 304 is 0.5 mm.

According to another disclosure, there is provided a system for placing, compacting or burnishing root repair materials for root-end surgery (a micro plugger) to fill root-end cavities during root-end surgery, and specifically for placing, compacting or burnishing newer root repair materials. The system comprises one or more than one device for placing root repair materials for root-end surgery to fill root-end cavities during root-end surgery. In a preferred embodiment, the system comprises two devices for placing root repair materials for root-end surgery to fill root-end cavities during root-end surgery. In another preferred embodiment, the system comprises three devices for placing root repair materials for root-end surgery to fill root-end cavities during root-end surgery. In a preferred embodiment, the system comprises written or recorded instructions for using the one or more than one device.

According to another disclosure, there is provided a method for placing, compacting or burnishing root repair materials for root-end surgery to fill root-end cavities during root-end surgery. In one embodiment, the method comprises providing one or more than one device for placing and compacting root repair materials for root-end surgery to fill root-end cavities during root-end surgery, or comprises providing a system for placing and compacting root repair materials for root-end surgery to fill root-end cavities during root-end surgery, and then using the device or the system to place, compact or burnish root repair materials for root-end surgery to fill root-end cavities during root-end surgery. In one embodiment, the method comprises providing one device for placing and compacting root repair materials for root-end surgery to fill root-end cavities during root-end surgery. In another embodiment, the method comprises providing two devices for placing and compacting root repair materials for root-end surgery to fill root-end cavities during root-end surgery. In another embodiment, the method comprises providing three devices for placing and compacting root repair materials for root-end surgery to fill root-end cavities during root-end surgery.

In one embodiment, the method further comprises providing a root repair material. In a preferred embodiment, the root repair material is selected from the group consisting of mineral trioxide aggregate, Biodentin^{®} and EndoSequence^{®} Root Repair Material. Then, the method comprises using the one or more than one device or the system, and using the root repair material to fill a root-end cavity in a tooth.

In one embodiment, the method further comprises preparing a tooth to receive the root repair material. In another embodiment, the method further comprises diagnosing a patient with a condition or disease of a tooth suitable for repair with the method according to the present disclosure. In one embodiment, the patient has previously had a root canal or apicoectomy.

## Claims

1. A device for placing and compacting root repair materials for root-end surgery to fill root-end cavities during root-end surgery, the device comprising:
a) a first working section (102);
b) a second working section (104);
c) an intermediate section (106) between the first working section and the second working section;
d) a primary axis a defining a total axial length n;
where the first working section (102) joins the intermediate section at a first working section/ intermediate section junction;
where the second working section (104) joins the intermediate section at a second working section/ intermediate section junction;
where the intermediate section (106) comprises a primary axis coincident the primary axis a of the device, and comprises an axial length o along the primary axis a between the first working section/ intermediate section junction and the second working section/ intermediate section junction;
where the intermediate section (106) further comprises a cross-sectional area perpendicular to the primary axis a;
where the cross-sectional area of the intermediate section (106) comprises an outer circumference defining an outer surface of the intermediate section;
where the outer surface of the intermediate section (106) comprises a gripping surface to assist a user in manipulating the device;
where the first working section (102) of the device comprises a proximal part, a distal part, and an intermediate part (118) between the proximal part and the distal part;
where the proximal part of the first working section (102) joins the intermediate section of the device to the intermediate part (118) of the first working section;
where the proximal part of the first working section (102) joins the intermediate section of the device at the first working section/intermediate section junction;
where the proximal part of the first working section (102) joins the intermediate part (118) of the first working section of the device at a proximal part of the first working section/intermediate part of the first working section junction;
where the proximal part of the first working section (102) comprises a primary axis coincident the primary axis a of the device, and an axial length p along the primary axis a between the first working section/ intermediate section junction and proximal part of the first working section/intermediate part of the first working section junction; where the intermediate part (118) of the first working section joins the proximal part of the first working section to the distal part of the first working section;
where the intermediate part (118) of the first working section (102) joins the proximal part of the first working section at the proximal part of the first working section/intermediate part of the first working section junction;
where the intermediate part (118) of the first working section (102) joins the distal part of the first working section at an intermediate part of the first working section/distal part of the first working section junction;
where the intermediate part (118) comprises a primary axis b which forms an angle α with the primary axis a of the device, and comprises an axial length q along the primary axis b between the proximal part of the first working section/intermediate part of the first working section junction and the intermediate part of the first working section/distal part of the first working section junction;
where the primary axis b is in the same plane as the primary axis a;
where the distal part of the first working section joins the intermediate part (118) of the first working section at the intermediate part of the first working section/distal part of the first working section junction;
where the distal part of the first working section comprises a proximal end and a distal end;
where the distal part of the first working section further comprises a primary axis c which forms an angle β with the primary axis b of the intermediate part (118) of the first working section; where the primary axis c is in the same plane as the primary axis a and the primary axis b;
where the distal part of the first working section further comprises an axial length r along the primary axis c between the intermediate part of the first working section/distal part of the first working section junction and the distal end of the distal part of the first working section; where the proximal end of the distal part of the first working section comprises a cross- sectional diameter perpendicular to the primary axis c;
where the distal end of the distal part of the first working section forms an oval shape when viewed into the primary axis c of the distal part of the first working section;
where the distal end has a greater lateral axis comprising a midpoint and a lesser lateral axis comprising a midpoint;
where the greater lateral axis is perpendicular to and longer than the lesser lateral axis;
where the midpoint of the greater lateral axis crosses the midpoint of the lesser lateral axis;
where the greater lateral axis of the distal end is between 0.3 mm and 1.5 mm;
where the distal end of the distal part of the first working section (102) further comprises a serrated surface;
where the serrated surface comprises a plurality of raised pyramidal structures;
where the second working section comprises a proximal part of the second working section and a distal part of the second working section;
where the proximal part of the second working section (104) joins the intermediate section of the device at a second working section/ intermediate section junction, and the proximal part of the second working section joins the distal part of the second working section at a proximal part of the second working section/distal part of the second working section junction;
where the proximal part of the second working section (104) comprises a primary axis coincident the primary axis a of the device, and an axial length s along the primary axis a between the second working section/ intermediate section junction and the proximal part of the second working section/distal part of the second working section junction;
where the distal part of the second working section (104) comprises a proximal end and a distal end;
where the proximal end of the distal part of the second working section (104) joins the proximal part of the second working section at a proximal part of the second working section/distal part of the second working section junction;
where the distal part of the second working section comprises a primary axis d which forms an angle γ with the primary axis a of the device;
where the distal part of the second working section (104) further comprises an axial length t along the primary axis d between the proximal part of the second working section/distal part of the second working section junction and the distal end of the distal part of second working section;
where the primary axis d is in the same plane as the primary axis a, the primary axis b and the primary axis c;
where the proximal end of the distal part of the second working section (104) comprises a cross-sectional diameter perpendicular to the primary axis d of the distal part of the second working section; and
where the distal end of the distal part of the second working section (104) comprises a cross-sectional diameter perpendicular to the primary axis d of the distal part of the second working section.

2. The device of claim 1, where the gripping surface completely or partially covers the outer surface of the intermediate section (106).

3. The device of claim 1, where the axial length r of the distal part of the first working section (102) is between 2 mm and 10 mm.

4. The device of claim 1, where the angle α is between 90° and 160° and where the angle β is between 75° and 105°.

## Patentansprüche

1. Vorrichtung zur Positionierung und Verdichtung von Wurzelreparaturmaterialien bei operativen Eingriffen zur Einfüllung von Löchern am Wurzelende, umfassend:
a) einen ersten Arbeitsabschnitt (102);
b) einen zweiten Arbeitsabschnitt (104);
c) einen Zwischenabschnitt (106) zwischen dem ersten und zweiten Arbeitsabschnitt;
d) eine primäre Achse, die eine axiale Gesamtlänge n definiert;
wobei der erste Arbeitsabschnitt (102) an einer Verbindungsstelle des ersten Arbeitsabschnitts und des Zwischenabschnitts mit dem Zwischenabschnitt zusammentrifft;
wobei der zweite Arbeitsabschnitt (104) an einer Verbindungsstelle des zweiten Arbeitsabschnitts und des Zwischenabschnitts mit dem Zwischenabschnitt zusammentrifft;
wobei der Zwischenabschnitt (106) eine mit der Hauptachse a der Vorrichtung übereinstimmende Hauptachse sowie eine axiale Länge o entlang der Hauptachse a zwischen der Verbindungsstelle des ersten Arbeitsabschnitts mit dem Zwischenabschnitt und der Verbindungsstelle des zweiten Arbeitsabschnitts mit dem Zwischenabschnitt umfasst;
wobei der Zwischenabschnitt (106) ferner eine Querschnittsfläche umfasst, die senkrecht zur Hauptachse a verläuft;
wobei die Querschnittsfläche des Zwischenabschnitts (106) einen Außenumfang umfasst, der eine Außenfläche des Zwischenabschnitts definiert;
wobei die Außenfläche des Zwischenabschnitts (106) eine Grifffläche zur Unterstützung eines Benutzers beim Manipulieren der Vorrichtung umfasst;
wobei der erste Arbeitsabschnitt (102) der Vorrichtung einen proximalen Teil, einen distalen Teil und einen zwischen dem proximalen und dem distalen Teil angeordneten Zwischenteil (118) umfasst;
wobei der proximale Teil des ersten Arbeitsabschnitts (102) den Zwischenabschnitt der Vorrichtung mit dem Zwischenteil (118) des ersten Arbeitsabschnitts verbindet;
wobei der proximale Teil des ersten Arbeitsabschnitts (102) an der Verbindungsstelle des ersten Arbeitsabschnitts mit dem Zwischenabschnitt mit dem Zwischenabschnitt der Vorrichtung zusammentrifft;
wobei der proximale Teil des ersten Arbeitsabschnitts (102) an einem proximalen Teil des ersten Arbeitsabschnitts/einem Zwischenteil der Verbindungsstelle des ersten Arbeitsabschnitts mit dem Zwischenteil (118) des ersten Arbeitsabschnitts der Vorrichtung zusammentrifft;
wobei der proximale Teil des ersten Arbeitsabschnitts (102) eine Hauptachse umfasst, die mit der Hauptachse a der Vorrichtung übereinstimmt, und eine axiale Länge p entlang der Hauptachse zwischen der Verbindungsstelle des ersten Arbeitsabschnitts mit dem Zwischenabschnitt und der Verbindungsstelle des proximalen Teils des ersten Arbeitsabschnitts mit dem Zwischenteil des ersten Arbeitsabschnitts umfasst;
wobei der Zwischenteil (118) des ersten Arbeitsabschnitts den proximalen Teil des ersten Arbeitsabschnitts mit dem distalen Teil des ersten Arbeitsabschnitts verbindet;
wobei der Zwischenteil (118) des ersten Arbeitsabschnitts (102) an der Verbindungsstelle des proximalen Teils des ersten Arbeitsabschnitts mit dem Zwischenteil des ersten Arbeitsabschnitts mit dem Zwischenteil (118) zusammentrifft;
wobei der Zwischenteil (118) des ersten Arbeitsabschnitts (102) an der Verbindungsstelle des Zwischenteils des ersten Arbeitsabschnitts mit dem distalen Teil des ersten Arbeitsabschnitts mit dem distalen Teil des ersten Arbeitsabschnitts zusammentrifft;
wobei der Zwischenteil (118) eine Hauptachse b umfasst, die einen Winkel α mit der Hauptachse a der Vorrichtung bildet, und eine axiale Länge q entlang der Hauptachse b zwischen der Verbindungsstelle des proximalen Teils des ersten Arbeitsabschnitts mit dem Zwischenteil des ersten Arbeitsabschnitts und der Verbindungsstelle des Zwischenteils des ersten Abschnitts mit dem distalen Teil des ersten Arbeitsabschnitts umfasst;
wobei die Hauptachse b auf derselben Ebene liegt wie die Hauptachse a;
wobei der distale Teil des ersten Arbeitsabschnitts an der Verbindungsstelle des Zwischenteils des ersten Arbeitsabschnitts mit dem distalen Teil des ersten Arbeitsabschnitts mit dem distalen Teil (118) des ersten Arbeitsabschnitts zusammentrifft;
wobei der distale Teil des ersten Arbeitsabschnitts ein proximales Ende und ein distales Ende umfasst;
wobei der distale Teil des ersten Arbeitsabschnitts ferner eine Hauptachse c umfasst, die mit der Hauptachse b des Zwischenteils (118) des ersten Arbeitsabschnitts einen Winkel β bildet;
wobei die Hauptachse c auf derselben Ebene liegt wie die Hauptachse a und die Hauptachse b;
wobei der distale Teil des ersten Arbeitsabschnitts ferner eine axiale Länge r entlang der Hauptachse c zwischen der Verbindungsstelle des Zwischenteils des ersten Arbeitsabschnitts mit dem distalen Teil des ersten Arbeitsabschnitts und dem distalen Ende des distalen Teils des ersten Arbeitsabschnitts umfasst;
wobei das proximale Ende des distalen Teils des ersten Arbeitsabschnitts einen senkrecht zur Hauptachse c verlaufenden Querschnittsdurchmesser umfasst;
wobei das distale Ende des distalen Teils des ersten Arbeitsabschnitts bei Betrachtung in Richtung der Hauptachse c des distalen Teils des ersten Arbeitsabschnitts ein Oval bildet;
wobei das distale Ende eine größere Seitenachse mit einem Mittelpunkt und eine kleinere Seitenachse mit einem Mittelpunkt aufweist;
wobei die größere Seitenachse länger als die kleinere Seitenachse ist und senkrecht zu dieser verläuft;
wobei der Mittelpunkt der größeren Seitenachse sich mit dem Mittelpunkt der kleineren Seitenachse kreuzt;
wobei die größere Seitenachse des distalen Endes zwischen 0,3 und 1,5 mm beträgt;
wobei das distale Ende des distalen Teils des ersten Arbeitsabschnitts (102) ferner eine gezahnte Oberfläche umfasst;
wobei die gezahnte Oberfläche eine Mehrzahl erhobener Pyramidenstrukturen umfasst;
wobei der zweite Arbeitsabschnitt einen proximalen Teil und einen distalen Teil umfasst;
wobei der proximale Teil des zweiten Arbeitsabschnitts (104) an der Verbindungsstelle des zweiten Arbeitsabschnitts mit dem Zwischenabschnitt mit dem Zwischenabschnitt zusammentrifft; und der proximale Teil des zweiten Arbeitsabschnitts an einer Verbindungsstelle des proximalen Teils mit dem distalen Teil des zweiten Arbeitsabschnitts mit dem distalen Teil zusammentrifft;
wobei der proximale Teil des zweiten Arbeitsabschnitts (104) eine Hauptachse umfasst, die mit der Hauptachse a der Vorrichtung übereinstimmt, und eine axiale Länge p entlang der Hauptachse zwischen der Verbindungsstelle des zweiten Arbeitsabschnitts mit dem Zwischenabschnitt und der Verbindungsstelle des proximalen Teils des zweiten Arbeitsabschnitts mit dem Zwischenteil des zweiten Arbeitsabschnitts umfasst;
wobei der distale Teil des zweiten Arbeitsabschnitts (104) ein proximales Ende und ein distales Ende umfasst;
wobei das proximale Ende des distalen Teils des zweiten Arbeitsabschnitts (104) an einer Verbindungsstelle des proximalen Teils mit dem distalen Teil des zweiten Arbeitsabschnitts mit dem proximalen Teil des zweiten Arbeitsabschnitts zusammentrifft;
wobei der distale Teil des zweiten Arbeitsabschnitts eine Hauptachse d umfasst, die einen Winkel y mit der Hauptachse a der Vorrichtung bildet;
wobei der distale Teil des zweiten Arbeitsabschnitts (104) ferner eine axiale Länge t entlang der Hauptachse d zwischen der Verbindungsstelle des proximalen Teils mit dem distalen Teil des zweiten Arbeitsabschnitts und dem distalen Ende des distalen Teils des zweiten Arbeitsabschnitts umfasst;
wobei die Hauptachse d auf derselben Ebene liegt wie die Hauptachse a, die Hauptachse b und die Hauptachse c;
wobei das proximale Ende des distalen Teils des zweiten Arbeitsabschnitts (104) einen senkrecht zur Hauptachse d des distalen Teils des zweiten Arbeitsabschnitts verlaufenden Querschnittsdurchmesser umfasst und
wobei das distale Ende des distalen Teils des zweiten Arbeitsabschnitts (104) einen senkrecht zur Hauptachse d des distalen Teils des zweiten Arbeitsabschnitts verlaufenden Querschnittsdurchmesser umfasst.

2. Vorrichtung nach Anspruch 1, wobei die Grifffläche die Außenfläche des Zwischenabschnitts (106) ganz oder teilweise abdeckt.

3. Vorrichtung nach Anspruch 1, wobei die axiale Länge r des distalen Teils des ersten Arbeitsabschnitts (102) zwischen 2 und 10 mm beträgt.

4. Vorrichtung nach Anspruch 1, wobei der Winkel α zwischen 90 und 160° liegt und der Winkel β zwischen 75 und 105° liegt.

## Revendications

1. Dispositif de placement et de compactage de matériaux de réparation de racines destinés à une chirurgie de racines afin de remplir des cavités de racines pendant la chirurgie de racines, le dispositif comprenant :
a) une première section de traitement (102) ;
b) une seconde section de traitement (104) ;
c) une section intermédiaire (106) située entre la première section de traitement et la seconde section de traitement ;
d) un axe principal a qui définit une longueur axiale totale n ;
dans lequel la première section de traitement (102) rejoint la section intermédiaire au niveau d'une jonction de première section de traitement/de section intermédiaire ;
dans lequel la seconde section de traitement (104) rejoint la section intermédiaire au niveau d'une jonction de seconde section de traitement/de section intermédiaire ;
dans lequel la section intermédiaire (106) comprend un axe principal qui coïncide avec l'axe principal a du dispositif, et comprend une longueur axiale o le long de l'axe principal a entre la jonction de première section de traitement/de section intermédiaire et la jonction de seconde section de traitement/de section intermédiaire ;
dans lequel la section intermédiaire (106) comprend en outre une zone transversale perpendiculaire à l'axe principal a ;
dans lequel la zone transversale de la section intermédiaire (106) comprend une circonférence extérieure qui définit une surface extérieure de la section intermédiaire ;
dans lequel la surface extérieure de la section intermédiaire (106) comprend une surface de prise destinée à aider un utilisateur à manipuler le dispositif ;
dans lequel la première section de traitement (102) du dispositif comprend une partie proximale, une partie distale, et une partie intermédiaire (118) entre la partie proximale et la partie distale ;
dans lequel la partie proximale de la première section de traitement (102) joint la section intermédiaire du dispositif à la partie intermédiaire (118) de la première section de traitement ;
dans lequel la partie proximale de la première section de traitement (102) rejoint la section intermédiaire du dispositif au niveau de la jonction de première section de traitement/de section intermédiaire ;
dans lequel la partie proximale de la première section de traitement (102) rejoint la partie intermédiaire (118) de la première section de traitement du dispositif au niveau d'une partie proximale de la première section de traitement/de la partie intermédiaire de la jonction de première section de traitement ;
dans lequel la partie proximale de la première section de traitement (102) comprend un axe principal qui coïncide avec l'axe principal a du dispositif, et une longueur axiale p le long de l'axe principal a entre la jonction de première section de traitement/de section intermédiaire et la partie proximale de la première section de traitement/de la partie intermédiaire de la jonction de première partie de traitement ;
dans lequel la partie intermédiaire (118) de la première section de traitement joint la partie proximale de la première section de traitement à la partie distale de la première section de traitement ;
dans lequel la partie intermédiaire (118) de la première section de traitement (102) rejoint la partie proximale de la première section de traitement au niveau de la partie proximale de la première section de traitement/de la partie intermédiaire de la jonction de première section de traitement ;
dans lequel la partie intermédiaire (118) de la première section de traitement (102) rejoint la partie distale de la première section de traitement au niveau d'une partie intermédiaire de la première section de traitement/de la partie distale de la jonction de première section de traitement ;
dans lequel la partie intermédiaire (118) comprend un axe principal b qui forme un angle d avec l'axe principal a du dispositif, et comprend une longueur axiale q le long de l'axe principal b entre la partie proximale de la première section de traitement/la partie intermédiaire de la jonction de première section de traitement et la partie intermédiaire de la première section de traitement/la partie distale de la jonction de première section de traitement ;
dans lequel l'axe principal b se trouve sur le même plan que l'axe principal a ;
dans lequel la partie distale de la première section de traitement rejoint la partie intermédiaire (118) de la première section de traitement au niveau de la partie intermédiaire de la première section de traitement/de la partie distale de la jonction de première section de traitement ;
dans lequel la partie distale de la première section de traitement comprend une extrémité proximale et une extrémité distale ;
dans lequel la partie distale de la première section de traitement comprend en outre un axe principal c qui forme un angle β avec l'axe principal b de la partie intermédiaire (118) de la première section de traitement ; dans lequel l'axe principal c se trouve sur le même plan que l'axe principal a et l'axe principal b ;
dans lequel la partie distale de la première section de traitement comprend en outre une longueur axiale r le long de l'axe principal c entre la partie intermédiaire et la première section de traitement/la partie distale de la jonction de première section de traitement et l'extrémité distale de la partie distale de la première section de traitement ; dans lequel l'extrémité proximale de la partie distale de la première section de traitement comprend un diamètre transversal perpendiculaire à l'axe principal c ;
dans lequel l'extrémité distale de la partie distale de la première section de traitement forme un ovale lorsque l'on observe l'axe principal c de la partie distale de la première section de traitement ;
dans lequel l'extrémité distale possède un axe latéral plus important qui comprend un point intermédiaire et un axe latéral moins important qui comprend un point intermédiaire ;
dans lequel l'axe latéral plus important est perpendiculaire à et plus long que l'axe latéral moins important ;
dans lequel le point intermédiaire de l'axe latéral plus important croise le point intermédiaire de l'axe latéral moins important ;
dans lequel l'axe latéral plus important de l'extrémité distale mesure entre 0,3 mm et 1,5 mm ;
dans lequel l'extrémité distale de la partie distale de la première section de traitement (102) comprend en outre une surface dentelée ;
dans lequel la surface dentelée comprend une pluralité de structures pyramidales surélevées ;
dans lequel la seconde section de traitement comprend une partie proximale de la seconde section de traitement et une partie distale de la seconde section de traitement ;
dans lequel la partie proximale de la seconde section de traitement (104) rejoint la section intermédiaire du dispositif au niveau d'une jonction de seconde section de traitement/de section intermédiaire, et la partie proximale de la seconde section de traitement rejoint la partie distale de la seconde section de traitement au niveau d'une partie proximale de la seconde section de traitement/de la partie distale de la jonction de seconde section de traitement ;
dans lequel la partie proximale de la seconde section de traitement (104) comprend un axe principal qui coïncide avec l'axe principal a du dispositif, et une longueur axiale s le long de l'axe principal a entre la jonction de seconde section de traitement/de section intermédiaire et la partie proximale de la seconde section de traitement/la partie distale de la jonction de seconde section de traitement ;
dans lequel la partie distale de la seconde section de traitement (104) comprend une extrémité proximale et une extrémité distale ;
dans lequel l'extrémité proximale de la partie distale de la seconde section de traitement (104) rejoint la partie proximale de la seconde section de traitement au niveau d'une partie proximale de la seconde section de traitement/de la partie distale de la jonction de seconde section de traitement ;
dans lequel la partie distale de la seconde section de traitement comprend un axe principal d qui forme un angle γ avec l'axe principal a du dispositif ;
dans lequel la partie distale de la seconde section de traitement (104) comprend en outre une longueur axiale t le long de l'axe principal d entre la partie proximale de la seconde section de traitement/la partie distale de la jonction de seconde section de traitement et l'extrémité distale de la partie distale de la seconde section de traitement ;
dans lequel l'axe principal d se trouve sur le même plan que l'axe principal a, l'axe principal b et l'axe principal c ;
dans lequel l'extrémité proximale de la partie distale de la seconde section de traitement (104) comprend un diamètre transversal perpendiculaire à l'axe principal d de la partie distale de la seconde section de traitement ; et
dans lequel l'extrémité distale de la partie distale de la seconde section de traitement (104) comprend un diamètre transversal perpendiculaire à l'axe principal d de la partie distale de la seconde section de traitement.

2. Dispositif selon la revendication 1, dans lequel la surface de prise recouvre entièrement ou partiellement la surface extérieure de la section intermédiaire (106).

3. Dispositif selon la revendication 1, dans lequel la longueur axiale r de la partie distale de la première section de traitement (102) est comprise entre 2 mm et 10 mm.

4. Dispositif selon la revendication 1, dans lequel l'angle α est compris entre 90° et 160°, et dans lequel l'angle β est compris entre 75° et 105°.
